# EUROPÄISCHE PATENTSCHRIFT

(11) **EP 2 261 801 B1**
(45) Veröffentlichungstag und Bekanntmachung des Hinweises auf die Patenterteilung: **31.12.2014**
(21) Anmeldenummer: 09162586.3
(22) Anmeldetag: 12.06.2009
(51) Int. Cl.: G06F 11/14, G06F 9/445

(54) **Verfahren zum unterbrechungsfreien Update einer Master-Datenbank und der zugehörigen Slave-Datenbanken**
Procedure for the uninterruptible update of a master database and the associated slave databases
Procédé de mise à jour sans interruption d'une base de données maître et des bases de données esclaves associées

(43) Veröffentlichungstag der Anmeldung: 15.12.2010
(73) Patentinhaber: Siemens Schweiz AG, 8047 Zürich (CH)
(72) Erfinder: Burkhart, Benjamin, 8604, Volketswil (CH)
(74) Vertreter: Maier, Daniel Oliver

(56) Entgegenhaltungen:
- EP-A- 0 901 296
- EP-A- 0 950 955
- EP-A- 1 686 036
- EP-A- 1 686 477
- WO-A-2008/143408
- US-B1- 6 523 032

## Beschreibung

Der vorliegenden Erfindung liegt die Aufgabe zugrunde, ein Verfahren zum unterbrechungsfreien Update einer Master-Datenbank und den zugehörigen Slave-Datenbanken anzugeben.

Eisenbahnnetzwerke unterliegen heute immer noch der nationalen Hohheit des Staates, auf dem dieses Eisenbahnnetzwerk liegt. Zur Lenkung des Zugverkehrs auf einem derartigen nationalen Eisenbahnnetzwerk sind verschiedene regional wirksame Leittechnikzentren - nachfolgend allgemeiner als Netzwerkzellen bezeichnet - vorgesehen. Diese Netzwerkzellen steuern daher den Zugverkehr auf den ihnen jeweils zugewiesenen geographischen Bereichen. In der Regel ist es im heutigen Zustand einer derartigen dispositiven Zuglenkung noch so, dass sich ein Datenaustausch zwischen den einzelnen Netzwerkzellen auf den Austausch von Zugnummern an den Grenzen zwischen zwischen zwei benachbarten Netzwerkzellen beschränkt. Ebenso ist es heute noch vielfach der Fall, dass die einzelnen auf den Netzwerkzellen laufenden Systeme proprietär sind und sich daher die jeweilige Betriebssoftware von Netzwerkzelle zu Netzwerkzelle unterscheiden kann.

Innerhalb einer Netzwerkzelle werden mittels der Zellen-Software, also der auf dem Rechnernetzwerk der Zelle ausgeführten Leittechnik-Programm, die Züge gesteuert, indem Fahrstrassen gestellt und die Zugläufe auseinander abgestimmt und optimiert werden. Beim Vorliegen eines Updates für die Zellen-Software können beispielsweise Änderungen im eisenbahntechnischen Reglement und/oder in den Konfigurationsdaten, zum Beispiels aufgrund von Änderungen der Gleistopologie, in der Netzwerkzelle implementiert und in den operativ aktiven Betrieb übernommen werden.

Hierzu ist es momentan erforderlich, das Software-Update in den Randzeiten, also meistens in der Nacht zwischen 1 und 5 Uhr, zu installieren und zu testen. Hierbei kommt es aufgrund der erforderlichen Ladevorgänge und der nachfolgend notwendigen Systemneustarts zu zeitlich und betrieblich erheblichen Unterbrüchen, so dass die bestimmungsgemässe Funktion dieser Netzwerkzelle während dieser Zeit manuell aufrechterhalten werden muss. Ausserdem tritt während dieser Zeit ein hohes Aufkommen von betriebsbedingten Fehlermeldungen auf, die ja aufgrund des bestehenden Funktionsunterbruchs der Netzwerkszelle allein schon aus sicherheitsrelevanten Überlegungen auftreten müssen. Dabei ist es mitunter besonders schwierig, unter diesen Fehlermeldungen solche Meldungen aufzuspüren, die nun eben nicht auf den von dem Update-Vorgang hervorgerufenen Unterbruch zurück zu führen sind, sondern tatsächlich verkehrs- und/oder sicherheitsrelevante Störmeldungen sind, wie beispielsweise eine sich ankündigende Überlastung eines von mehreren Zugverbänden anvisierten Fahrwegs. Weiter ist natürlich aufgrund der Tatsache, dass diese Arbeiten nur in den Randzeiten ausgeführt werden können, der Druck an die beteiligten Personen sehr hoch, dass das Update einerseits erfolgreich installiert und dann auch noch erfolgreich in Betrieb genommen werden kann. Diese Randbedingung setzt daher ein hohes vorgängig vorzunehmendes Testvolumen voraus, was sich wiederum für den Netzbetreiber in einem gewissen Kostenvolumen widerspiegelt.

Aus der internationalen Patentanmeldung WO 2006/081850A1 ist ein Verfahren bekannt, bei dem zum unterbrechungsfreien Software-Update für eine Netzwerkzelle, insbesondere eine Leittechnikzelle, eines in eine Anzahl von Bereichen unterteilten Verkehrsnetzwerks, insbesondere eines in regionale Bereiche unterteilten Leitsystems für ein Eisenbahnnetzwerk die folgenden Schritte umfasst sind:
a) auf der Netzwerkzelle werden mindestens zwei Zellenmoleküle ausgestaltet, auf denen eine dieser Netzwerkzelle zugeordnete bereichsspezifische Zellen-Software ausführbar ist, wobei im Normalbetrieb eines dieser mindestens zwei Zellenmoleküle die Zellen-Software operativ aktiv ausführt,
b) bei Vorhandensein eines Software-Updates für die Zellen-Software wird das Update auf dem nicht-operativen Zellenmolekül installiert und ausgeführt,
c) das Update der Zellen-Software wird an einem dem Zellenmolekül temporär zum Testzweck zuordenbaren Arbeitsplatz geprüft, und
d) nach Bestehen des Tests wird auf das Zellenmolekül mit der upgedateten Zellensoftware umgeschaltet und die upgedatete Zellensoftware wird auf diesem Zellenmolekül operativ aktiv für die Netzwerkzelle ausgeführt.

Auf diese Weise ermöglicht es das Verfahren, dass die bestimmungsgemässe Aufgabe der Netzwerkzelle während eines Update der Zellensoftware überhaupt nicht oder ggfs. wirklich nur sehr kurzfristig unterbrochen werden muss, weil es mit dem Start des zweiten Zellenmolekül möglich ist, die operativ aktive Version der Zellen-Software weiterhin auszuführen und das Update der Zellen-Software parallel dazu zu starten und in einem nicht-operativ aktiven Zustand arbeiten zu lassen, was es wiederum ermöglicht, die Funktion dieses Updates mit den "scharfen" Daten und unter "quasi-scharfen" Bedindungen auszuführen und zu testen. Unter dem Begriff des Zellenmoleküls wird dabei eine logische in sich funktional abgeschlossene Instanz verstanden, auf der die Zellen-Software, oder mit anderen Worten etwas allgemeiner gesprochen, die Zellen-Logik aufgeführt wird.

Bei derartigen hoch verfügbaren dezentralen Datenverarbeitungssystemen mit Sicherheitsverantwortung, wie z.B. die Leitsysteme für Eisenbahnnetze, (safety related, SIL Spezifizierung), besteht jedoch weiterhin die Notwendigkeit, dass diese für die Aufgabe der Steuerung von unterbruchsfrei laufenden Prozessen in Verkehrsnetzen kontinuierlich Daten aus Datenbanken benötigen, was ganz besondere Vorkehrungen im Wege geeigneter Strukturen und Verfahren erforderlich macht, um Daten-Updates in die relevanten Datenbanken einspielen zu können, während der Betrieb weiter laufen kann. Updates für die in den Datenbanken liegenden Datensätze stehen beispielsweise bei Anlagenanpassungen an.

Dieses Notwendigkeit stellt sich in dieser Form allerdings erst mit der Einführung der Architektur eines Leitsystems, welches das gesamte Netz einer nationalen Bahn, wie z.B. das Netz der schweizerischen Bundesbahnen SBB, steuert und der Zugriff in den gesamten Leitprozess, d.h. auf das gesamte Bahnnetz, von jedem Leitsstellen-Arbeitsplatz aus möglich ist. Die Architektur für ein derartiges Leitsystem ist beispielsweise in der europäischen Patentanmeldung EP 1 686 036 A1 offenbart.

A Die Veröffentlichung EP-A-0901296 beschreibt ein Verfahren zum Update einer Master-Datenbank und mindestens einer zugehörigen Slave-Datenbank, die Bestandteil eines in eine Anzahl von Netzwerkzellen unterteilten Leitsystemnetzwerks ist, bei dem auf jeder Netzwerkzelle eine dieser Netzwerkzelle zugeordnete bereichsspezifische Zellen-Software und auf einem übergeordneten, das Leitsystemnetzwerk übergreifenden Leitplatz eine Leitplatz-Software ausgeführt werden.

Der vorliegenden Erfindung liegt daher die Aufgabe zugrunde, ein Verfahren für die Einspielung von Updates auf die Master-Datenbank und in der Folge von dieser Quelle dann auf die Slave- Datenbanken derart anzugeben, dass sichergestellt ist, dass für die im System vorhandenen Arbeitsplätze immer gültige Daten zur Verfügung stehen, d.h. im Besonderen auch während des Update ihrer Slave- DB. Das Verfahren muss weiter zuverlässig verhindern können, dass auf inkonsistente DB-Daten zugegriffen werden kann. Die Erfindung bezieht sich dabei im Besonderen auf Updates, welche nicht in einer Datenbanktransaktion durchgeführt werden können. Dazu gehören alle Updates der Datenbank, welche beispielsweise die Struktur der Datenbank-Tabellen verändern (wie z.B. das Einspielen eines Datenbank-Backups). Alle anderen Updates, welche nur den Inhalt der Datenbank-Tabellen ändern, können bereits heute mit Hilfe einer Transaktion konsistent in die Master-Datenbank und anschliessend mit Hilfe der Datenbankreplikation auf die Slave-Datenbanken übertragen werden.

Diese Aufgabe wird erfindungsgemäss durch ein Verfahren zum unterbrechungsfreien Update/Backup für eine Master-Datenbank und mindestens eine zugehörige Slave-Datenbank, die Bestandteil eines in eine Anzahl von Netzwerkzellen unterteilten Leitsystemnetzwerks sind, gelöst, bei dem:
a) auf jeder Netzwerkzelle eine dieser Netzwerkzelle zugeordnete bereichsspezifische Zellen-Software und auf einem übergeordneten Leitplatz eine Leitplatz-Software ausgeführt werden, wobei die Leitplatz-Software eine Explorer-Funktionalität im Leitsystemnetzwerk aufweist und eine Datenbank-Applikation in der Zellen-Software und der Leitplatz-Software ausgeführt wird,
b) bei Vorhandensein eines Daten-Updates für die Master-Datenbank mittel der Explorer-Funktionalität und der Datenbank-Applikation der Zugriff auf die Master-Datenbank gesperrt und jegliche Replikaton auf der mindestens einen Slave-Datenbank unterbunden wird, wobei die Zellen-Software und die Leitplatz-Software nun mehr auf die jeweils zugeordnete Slave-Datenbank zugreifen;
c) eine erfolgreiche Installation des Daten-Updates auf der Master-Datenbank mittels der Explorer-Funktionalität an den Leitplatz quittiert wird,
d) nach der Quittierung mittels der Explorer-Funktionalität die Datenbank-Applikation eine Freigabe zum Refresh der mindestens einen Slave-Datenbank erhält, woraufhin die Zellen-Software und die Leitplatz-Software exklusiv auf die Master-Datenbank zugreifen;
   und
e) jede Slave-Datenbank einen individuell gesteuerten Refresh-Vorgang nach der Refresh-Freigabe ausführt.

Weitere Ausführungsformen der Erfindung sind in den abhängigen Ansprüche spezifiziert.

Auf diese Weise erlaubt es das Verfahren, Updates/Backups der Datenbanken des Masters und der Slaves während dem Betrieb einzuspielen und einen sicheren Betrieb der Gesamtanlage während dem Update zu gewährleisten. Der besondere Vorteil der Erfindung besteht hier in dem fehlertoleranten Verfahren zum Einspielen von Datenbank-Restores und -Updates in einem Client-ServerSystem mit dezentraler über das grosses Leitsystem-Netzwerk verteilten Clients. Das Verfahren ist so angelegt, dass die gesamte Bedienung (lesender Datenbankzugriff) des Leitsystem-Netzwerks permanent und eineindeutig erhalten bleibt.

Besonders wichtig ist auch das Management von Fehlerereignissen beim Daten-Update. Aus diesem Grunde sieht es eine bevorzugte Weiterbildung der vorliegenden Erfindung vor, bei Nicht-Eintreffen der Refresh-Freigabe bei der Datenbank-Applikation einer Slave-Datenbank innerhalb einer Netzwerkzelle oder einem Fehlschlagen des Refresh-Vorgangs eine Replikationsstörungsmeldung für den Leitplatz zu generieren, wobei der Fehler durch einen vom Leitplatz abgesetzten Refresh-Befehl an die gestörte Slave-Datenbank oder einen Neustart der in der Zellen-Software ausgeführten Datenbank-Applikation behoben werden kann.

Zur Vermeidung ambivalenter Zustände kann es weiter vorgesehen sein, bei einem Fehlschlagen des Daten-Updates auf der Master-Datenbank die Master-Datenbank nicht freizugeben und daher auch die Refresh-Freigabe ausbleiben zu lassen. Als ultima ratia wird im Rahmen dieser Ausgestaltung die Möglichkeit gesehen, die Master-Datenbank bei einem fortlaufenden Fehlschlagen des Daten-Updates auf der Master-Datenbank zurückzusetzen und mit den zuletzt gespeicherten Daten neu aufzusetzen.

Für die Slave-Datenbanken kann dies in einer vorteilhaften Ausgestaltung der vorliegenden Erfindung bedeuten, dass die mindestens eine Slave-Datenbank mit ihren ursprünglich vorhandenen Daten neu gestartet wird, falls wegen eines Verbindungsunterbruchs oder eines sonstigen Fehlers während eines Refresh-Vorgangs das Daten-Update in einer Slave-Datenbank nicht repliziert werden konnte.

Im vorliegenden Fall bedient sich also der erfinderische Ansatz einer mehrstufigen Methode der fortschreitenden sukzessiven Aktualisierung von der Master-Datenbank ausgehend, welche die Information an die Slave-Datenbanken in den Netzwerkzellen (Bedienzellen) weitergibt. Der vorgesehene Vorgang erlaubt es daher, dass der Zugriff auf gültige Daten durch die in den Netzwerkzellen und dem Leitplatz angeordneten Arbeitsplatzrechner immer gewährleistet ist. Der gewählte Ansatz umschreibt sich mit dem Begriff der verteilten, hierarchisch aufgebauten Redundanz. Dadurch besteht eine Single Master / Multi Slave Struktur. Soweit in der Netzwerkzelle verfügbar und konsistent, wird im Regelbetrieb für den Datenbezug in einer Netzwerkzelle bevorzugt auf die lokale Slave-Datenbank zugegriffen. Fällt diese aus, wird die Master-Datenbank für den Datenbezug abgefragt.

Weitere vorteilhafte Ausgestaltungen der Erfindung können den übrigen Unteransprüchen entnommen werden.

Auführungsbeispiele der Erfindung werden nachfolgend anhand der Zeichnung näher erläutert. Dabei zeigen:
- Figur 1: eine schematische Ansicht der Architektur eines Leitsystems für ein Eisenbahnnetz; und
- Figur 2: eine detaillierte schematische Ansicht des Verfahrens zum Update der Master-Datenbank und der davon abhängigen Slave-Datenbanken in einer ersten Phase; und
- Figur 3: eine detaillierte schematische Ansicht des Verfahrens zum Update der Master-Datenbank und der davon abhängigen Slave-Datenbanken in einer zweiten Phase.

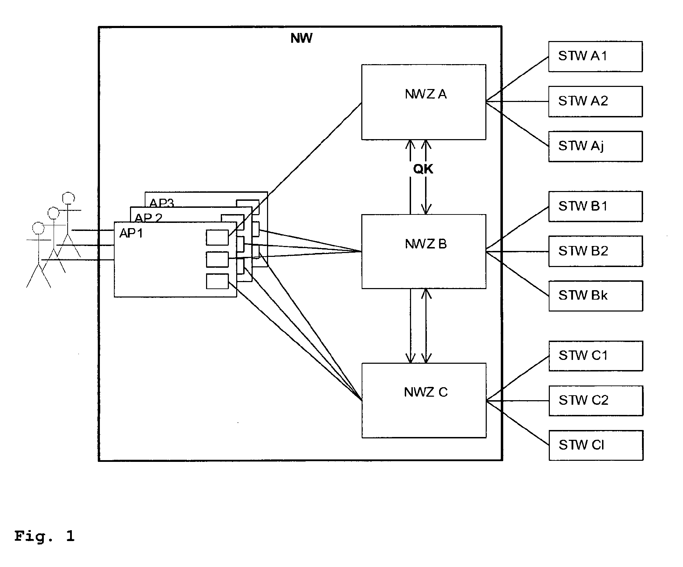

Figur 1 zeigt einer schematische Ansicht der Architektur eines Leitsystems, nachfolgend als Netzwerk NW bezeichnet, für ein Eisenbahnnetz. So ist heute beispielsweise das Bahnnetz der schweizerischen Bundesbahnen (SBB) auf etwa 15 isolierte Leitsysteme aufgeteilt und erst zwei dieser Netzwerkzellen sind derzeit mit dem neuen übergeordneten dispositiven Leitsystem ILTIS NETZ® der Siemens Schweiz AG ausgestaltet (weitere werden folgen). Bei der Aufteilung handelt es sich um eine geografische Aufteilung, bei welcher jedes System für ein bestimmtes Gebiet zuständig ist. Die Kommunikation zwischen diesen Systemen beschränkt sich auf den Austausch von Zugnummern an den Grenzen zwischen den Systemen. Dagegen ermöglicht es die Architektur des neuen Leitsystems ILTIS NETZ® nun den gesamten Zugverkehr innerhalb dieser aufgerüsteten Netzwerkzellen von einem beliebigen Leitstellen-Arbeitsplatz, kurz Leitplatz AP, aus zu steuern.

Im Netzwerk NW kann also ein Leitplatz AP1 bis AP3 mit mehreren Netzwerkzellen NWZ A bis NWZ C kommunizieren, welche jeweils für ein geografisches Gebiet zuständig sind. Daraus ergeben sich gegenüber der Vielzahl der früheren für sich alleinstehenden Leitsysteme die folgenden neuen Architekturelemente:
Der Leitplatz AP1 bis AP3 fasst die Informationen konfigurationsgemäss aus den einzelnen Netzwerkzellen NWZ zusammen und erzeugt für den Benutzer eine Gesamtsicht. Die Netzwerkzellen NWZ werden für den Benutzer zu einem einzigen grossen System des Netzwerks NW. Dabei ist das System für den Benutzer transparent, so dass sich das aus mehreren kleineren Teilsystemen zusammengesetzte Gesamtsystem genauso verhält, wie ein einziges grosses Leitsystem über das gesamte Bahnnetz.

Die Elemente des Systems erfüllen die folgenden Anforderungen, wodurch die folgenden Architekturziele wunschgemäss erfüllt werden können:
In dem Netzwerk NW entsteht daher für den Benutzer der Eindruck, dass für das gesamte Eisenbahnnetz nur ein Netzwerk-Leitsystem besteht. Für einen Teil der Leitsystem-Funktionen kann dies über die Integration der Informationen auf dem Leitplatz AP1 bis AP3 realisiert werden. Um für den anderen Teil der Leitsystem-Funktionen diese Anforderung zu realisieren, tauschen die Netzwerkzellen NWZ Informationen untereinander im Wege einer Querkommunikation QK aus.
Beispiele dazu sind die Leitsystem-Aufgaben Zugnummerverwalter (ZV), Zuglenkung (ZL) und Überfüllverhinderung (UeV). Somit ermöglicht die Querkommunikation QK zwischen den Netzwerkzellen NWZ die zellenübergreifenden Funktionen.

Die für die weitergehenden Beschreibung mit Bezugnahmen auf die in den Figuren 1 bis 3 verwendeten Begriffe und Abkürzungen werden nachstehend tabellarisch kurz erläutert resp. definiert.

| **Komponente** | **Beschreibung** |
|---|---|
| ApX | Leitplatz-SW, welche lesend oder schreibend auf eine Datenbank zugreifen kann (Default ist eine Master-Datenbank MDB). |
| SWZ | Zellen-SW, welche lesend auf eine Datenbank zugreifen kann (Default ist eine lokale Slave-Datenbank SDB). |
| GD | Komponente der Zellen-SW und der Leitplatz-SW, welche die lokale Datenbank (auf demselben Rechner) verwaltet. Diese Komponente startet die Datenbank, stoppt sie, spielt Updates/Backups ein, verwaltet die Datenbankbenutzerrechte usw. |
| MXUAP | Zellenkomponente, welches Befehle von einem ILTIS-Explorer IE entgegennimmt und an die GD-Aufgabe in derselben Netzwerkzelle NWZ weiterleitet. |
| IE | Komponente der Leitplatz-SW mit Benutzeroberfläche (GUI), mit welcher ein Leitplatz-Benutzer u.a. globale Datenbankbefehle ausführen kann (z.B. Update/Backup erzeugen/einspielen oder einen Refresh-Befehl an eine Slave-Datenbank SDB schicken). |
| NWZ | Netzwerkzelle mit Zellen-SW, Zellenrechner und mindestens einer Aufgabe GD mit zugehöriger Datenbank (Slave- oder Master-Datenbank). |
| Molekül | Sammlung von einer oder mehreren Netzwerkzellen. |
| AP | Leitplatz mit der Leitplatz-SW (beinhaltet auch den ILTIS-Explorer IE) |
| ZGDB | Zelle mit Master-Datenbank. |
| Query | Ein Datenbankbefehl.(Z.B. "SELECT * FROM table") |
| Replikation | Eine Slave-Datenbank SDB führt sofort automatisch alle datenverändernden Queries, welche auf der Masterdatenbank MDB erfolgreich ausgeführt wurden, auch lokal bei sich aus. Eine Slave-Datenbank SDB entspricht so inhalt-lich immer exakt der Master-Datenbank MDB. |
| Restore | Einspielen eines vorgängig erstellen Datenbank-Updates/Backups. |
| Refresh-Befehl | Wenn eine Aufgabe GD, welche eine Slave-Datenbank SDB verwaltet, einen Refresh-Befehl bekommt (vom ILTIS-Explorer IE, weitergeleitet von MXUAP), wird ein Update/Backup von der Master-Datenbank erzeugt, der Zugriff auf die lokale Slave-Datenbank SDB gesperrt, das Update/Backup eingespielt und anschliessend der Zugriff wieder freigegeben. Während dem Einspielen der Updates/Backups ist somit ein Zugriff auf die Slave-Datenbank SDB nicht möglich. Die Replikation startet automatisch. |

Für jeden Leitplatz AP und jede Netzwerkzelle gilt: Falls die Default-Datenbank nicht erreichbar ist, wird automatisch auf eine Fallback-Datenbank ausgewichen; dies kann eine andere Slave- oder aber die Master-Datenbank MDB sein. Anschliessend wird nach einer vorgebbaren Zeit, beispielsweise ca. alle zwei Minuten kontrolliert, ob die Default-Datenbank wieder erreichbar ist; wenn ja, wird wieder auf diese Datenbank zurückgewechselt. Schreibzugriffe von einem Leitplatz und/oder einer Netzwerkzelle auf eine Datenbank sind nur auf der Master-Datenbank MDB möglich, auf alle Slave-Datenbanken SDB kann nur lesend zugegriffen werden.

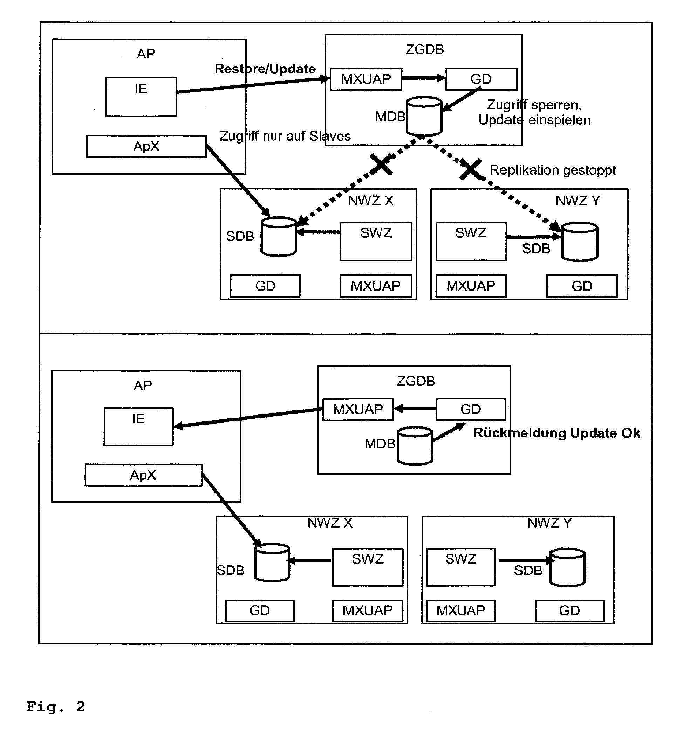

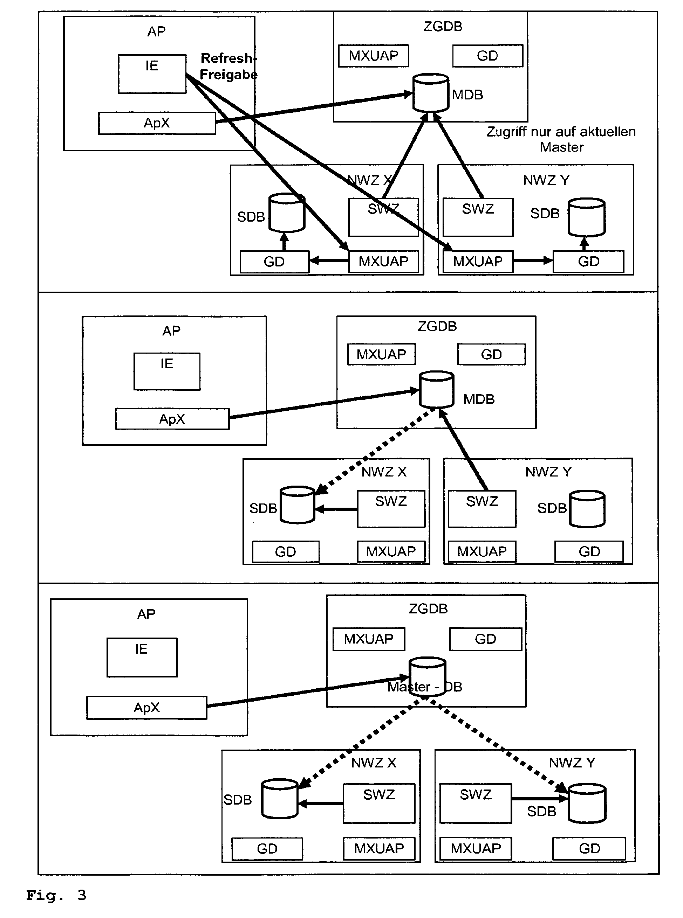

Bei einem Datenbank-Restore wird, die Master-Datenbank MDB vom Netz genommen und das Backup wird eingespielt. In dieser Zeit lesen die Leitplätze AP ihre Daten von den Slave-Datenbanken SBD. Nach erfolgreichem Update wird die Master-Datenbank MDB wieder freigegeben. Da die Leitplätze AP allerdings nur periodisch, z.B. nur alle zwei Minuten prüfen, ob die Master-Datenbank MDB wieder erreichbar ist, wartet die Master-Datenbank MDB nach erfolgreichem Einspielen der Daten etwas mehr als dieses Intervall bis die Replikation an die Slave-Datenbanken SDB freigegeben wird. Dieses Vorgehen wird gewählt, um sicherzugehen, dass alle Leitplätze AP wieder auf der Master-Datenbank MDB lesen. Erst danach wird die Replikation freigegeben, welche die Slave-Datenbanken SDB dazu veranlasst, das Update/Backup einzuspielen. Genau diese Phase ist aber heikel, da kurzzeitig während der Replikation die Daten vollständig auf den Slave-Datenbanken gelöscht werden. Wenn unglücklicherweise eine Netzwerkzelle NWZ genau in dieser Zeit auf die Slave-Datenbank SDB zugreift, könnte es zu Fehlern kommen, da die benötigten Daten kurzzeitig inkonsistent in den Slave-Datenbanken SDB vorhanden sind. Diese Inkonsistenz kann im leittechnisch-schlimmsten, aber sicherheitstechnisch unbedenklichen Fall zu einem Nothalt aller auf den Strecken der Netzwerkzellen zirkulierenden Züge führen. Dieser Worst-Case muss und kann durch die erfindungsgemässe Lösung verhindert werden:
Anhand der Figuren 2 und 3 wird das erfindungsgemässe Verfahren nun mehr erläutert:

### Figur 2, oberer Abschnitt

Der ILTIS-Explorer IE prüft vor einem Restore des Updates/Backups, ob alle Netzwerkzellen NWZ erreichbar sind und ob auf diesen die Aufgabe GD wirksam ausgeführt wird. Der ILTIS-Explorer IE gibt eine Warnung aus, falls dies nicht für alle Netzwerkzellen zutreffend ist. Nur im letztgenannten Fall obliegt dem Leitplatz-Benutzer die Entscheidung, ob er das Restore trotzdem durchführen möchte. Die Information, welche Netzwerkzelle oder Moleküle wunschgemäss arbeiten, wird beim Öffnen des Restore-Dialogs aus der Master-Datenbank MDB gelesen. Die SW-Komponente GD sperrt den Zugriff auf die Master-Datenbank MDB, sowohl für alle Clients, als auch für alle Slave-Datenbanken SDB. Somit findet in diesem Status keine Replikation statt. Die Software-Komponente GD spielt anschliessend das Update/Backup ein. Dabei konfiguriert die SW-Komponente GD die Master-Datenbank MDB so, dass die Slave-Datenbanken SDB das eingespielte Update/Backup nicht automatisch replizieren (Replikation bleibt stehen).

### Figur 2, unterer Abschnitt

Nach einer erfolgreichen Installation des Updates auf der Master-Datenbank MDB wird die Master-Datenbank MDB wieder freigegeben. Innerhalb der Netzwerkzellen NWZ als auch der Leitplatz AP wird aber noch auf die jeweils vorgesehenen redundanten Slave-Datenbanken SDB zugegriffen.

### Figur 3, oberer Abschnitt

Der ILTIS-Explorer IE schickt unmittelbar nach der positiven Rückmeldung der Master-Datenbank MDB einen Refresh-Befehl an alle Slave-Datenbanken SDB. Die Netzwerkzellen NWZ und der Leitplatz AP greifen nun mehr exklusiv auf die Master-Datenbank MDB zu; ein Zugriff auf die jeweilige Slave-Datenbank SDB wird mittels der Software-Komponente GD nach dem Aussenden des Refresh-Befehl temporär gesperrt.

### Figur 3, mittlerer Abschnitt

Die Software ApX des Leitplatzes AP greift nun wieder auf die Master-Datenbank MDB zu. Der gestrichelte Pfeil von der Master-Datenbank MDB zur Slave-Datenbank der SDB der Netzwerkzelle NWT X soll für einen erfolgreichen Refresh-Vorgang und anschliessender fortlaufender Replikation für die Slave-Datenbank SDB der Netzwerkzelle NWZ X stehen. Die andere Netzwerkzelle NWZ Y greift nach wie vor auf die Master-Datenbank MDB zu.

### Figur 3, unterer Abschnitt

Auch auf der Slave-Datenbank SDB der Netzwerkzelle NWZ Y ist nun der Daten-Refresh erfolgreich vorgenommen worden. Beide Netzwerkzellen NWZ greifen nun wieder auf ihre jeweiligen Slave-Datenbanken SDB zu. Der Regelbetrieb ist nun wieder hergestellt, ohne dass es während des Updates von Master- und Slave-Datenbanken MDB, SDB auch nur während eines Bruchteils dieser Installationsdauer zu unerwünschten Dateninkonsistenzen gekommen wäre.

Zusätzlich sind nun noch weitere Vorkehrungen zur Beherrschung möglicher Fehler beim Daten-Update getroffen worden. So kann es bei dem erfindungsgemässen Verfahren vorkommen, dass nicht alle Slave-Datenbanken SDB mit dem Refresh-Befehl erreicht wurden. Dieser Fehlerfall hätte zur Folge, dass diese nicht-benachrichtigte Slave-Datenbank SDB weiterhin im alten Zustand mit den alten Daten verbleibt. Der Leitplatz-Benutzer wird aber anhand des Statusdialogs darüber informiert, dass ein Refresh auf einer Slave-Datenbank SDB fehlgeschlagen ist. Zudem wird in einem Meldungsverwalter der Leitplatz-SW eine Replikationsstörung generiert. Der Zustand mit unterschiedlichen Daten im Leitsystem NW, hier im ILTIS-NET2®, gefährdet den Betrieb nicht, jedoch ist mit Einschränkungen zu rechnen, wenn der Zustand lange bestehen bleibt. Der Fehler kann relativ leicht mit einem manuellen Refresh-Befehl an die betroffenen Slave-Datenbank SDB behoben werden; alternativ kann auch vom Leitplatz AP oder aus der jeweiligen Netzwerkzelle NWZ heraus die SW-Komponente GD der betroffenen Netzwerkzelle neu gestartet werden.

Wenn beim Einspielen eines Backups in der Master-Datenbank MDB ein Fehler auftritt und die Master-Datenbank MDB somit ungültige Daten enthält, wird der Benutzer darauf hingewiesen. Die Master-Datenbank MDB wird nicht freigeben, bis ein erfolgreicher Restore durchgeführt wurde. In diesem Fall wird kein Refresh-Befehl an die Slave-Datenbanken SDB geschickt. Der Benutzer hat die Möglichkeit, ein anderes Backup einzuspielen. Wenn dies nicht funktioniert, muss er den Befehl "GlobaleDaten löschen" ausführen, was bewirkt, dass die Master-Datenbank MDB mit den letzten gespeicherten Daten neu aufgesetzt wird.

Wenn während dem Refresh-Vorgang in der Slave-Datenbank SDB ein Fehler auftritt, startet die Slave-Datenbank SDB automatisch wieder mit den ursprünglichen Daten; sie behält aber die Refresh-Freigabe und versucht den Refresh-Vorgang zu einem späteren Zeitpunkt erfolgreich auszuführen. Dieser Zeitpunkt kann manuell oder aber automatisiert vorgegeben werden.

## Patentansprüche

1. Verfahren zum unterbrechungsfreien Update für eine Master-Datenbank (MDB) und mindestens eine zugehörige Slave-Datenbank (SDB), die Bestandteil eines in eine Anzahl von Netzwerkzellen (NWZ) unterteilten Leitsystemnetzwerks (NW) ist, bei dem
a) auf jeder Netzwerkzelle (NWZ) eine dieser Netzwerkzelle (NWZ) zugeordnete bereichsspezifische Zellen-Software (SWZ) und auf einem übergeordneten, das Leitsystemnetzwerk (NW) übergreifenden Leitplatz (AP) eine Leitplatz-Software (ApX) ausgeführt werden, wobei die Leitplatz-Software (ApX) eine Explorer-Funktionalität (IE) im Leitsystemnetzwerk (NW) aufweist und in der Zellen-Software (SWZ) und der Leitplatz-Software (ApX) eine Datenbank-Applikation (GD) ausgeführt werden,
b) bei Vorhandensein eines Daten-Updates für die Master-Datenbank (MDB) mittels der Explorer-Funktionalität (IE) und der Datenbank-Applikation (GD) der Zugriff auf die Master-Datenbank (MDB) gesperrt und jegliche Replikaton auf der mindestens einen Slave-Datenbank (SDB) unterbunden wird, wobei die Zellen-Software (SWZ) und die Leitplatz-Software (ApX) nun mehr auf die jeweils zugeordnete Slave-Datenbank (SDB) zugreifen;
c) eine erfolgreiche Installation des Daten-Updates auf der Master-Datenbank (MDB) mittels der Explorer-Funktionalität (IE) an den Leitplatz (AP) quittiert wird,
d) nach der Quittierung mittels der Explorer-Funktionalität (IE) die Datenbank-Applikation (GD) eine Freigabe zum Refresh der mindestens einen Slave-Datenbank (SDB) erhält, woraufhin die Zellen-Software (SWZ) und die Leitplatz-Software (ApX) exklusiv auf die Master-Datenbank (MDB) zugreifen;
und
e) jede Slave-Datenbank (SDB) einen individuell gesteuerten Refresh-Vorgang nach der Refresh-Freigabe ausführt.

2. Verfahren nach Anspruch 1,
**dadurch gekennzeichnet, dass**
bei Nicht-Eintreffen der Refresh-Freigabe bei der Datenbank-Applikation (GD) einer Slave-Datenbank (SDB) innerhalb einer Netzwerkzelle (NWZ) oder einem Fehlschlagen des Refresh-Vorgangs eine Replikationsstörungsmeldung für den Leitplatz (AP) generiert wird, wobei der Fehler durch einen vom Leitplatz (AP) abgesetzten Refresh-Befehl an die gestörte Slave-Datenbank (SDB) oder einen Neustart der in der Zellen-Software (SWZ) ausgeführten Datenbank-Applikation (GD) behoben wird.

3. Verfahren nach Anspruch 1 oder 2,
**dadurch gekennzeichnet, dass**
bei einem Fehlschlagen des Daten-Updates auf der Master-Datenbank (MDB) die Master-Datenbank (MDB) nicht freigegeben wird und daher auch die Refresh-Freigabe ausbleibt.

4. Verfahren nach Anspruch 3,
**dadurch gekennzeichnet, dass**
die Master-Datenbank (MDB) bei einem fortlaufenden Fehlschlagen des Daten-Updates auf der Master-Datenbank (MDB) zurückgesetzt wird und mit den zuletzt gespeicherten Daten neu aufgesetzt wird.

5. Verfahren nach einem der Ansprüche 1 bis 4,
**dadurch gekennzeichnet, dass**
die mindestens eine Slave-Datenbank (SDB) mit ihren ursprünglich vorhandenen Daten neu gestartet wird, falls wegen eines Verbindungsunterbruchs oder eines sonstigen Fehlers während eines Refresh-Vorgangs das Daten-Update in einer Slave-Datenbank (SDB) nicht repliziert werden konnte.

## Claims

1. Procedure for an uninterruptible update for a master database (MDB) and at least one associated slave database (SDB), which is a component of a control system network (NW) divided into a number of network cells (NWZ), in which
a) area-specific cell software (SWZ) assigned to this network cell (NWZ) is executed at each network cell (NWZ) and control position software (ApX) is executed at a higher-ranking control position (AP) covering the entire control system network (NW), wherein the control position software (ApX) has an Explorer (IE) functionality in the control system network (NW) and a database application (GD) is executed in the cell software (SWZ) and the control position software (ApX),
b) if a data update for the master database (MDB) is available, access to the master database is blocked by means of the Explorer (IE) functionality and the database application (GD) and any replication at the at least one slave database (SDB) is suppressed, wherein the cell software (SWZ) and the control position software (ApX) now access the assigned slave database (SDB) in each case;
c) a successful installation of the data update on the master database (MDB) is acknowledged by the Explorer (IE) functionality to the control position (AP),
d) after the acknowledgement by means of the Explorer (IE) functionality, the database application (GD) receives a release to refresh the at least one slave database (SDB), after which the cell software (SWZ) and the control position software (ApX) exclusively access the master database (MDB); and
e) each slave database (SDB) executes an individually-controlled refresh process after the refresh release.

2. Procedure according to claim 1,
**characterised in that**,
if the refresh release does not arrive at the database application (GD) of a slave database (SDB) within a network cell (NWZ) or if the refresh process fails, a replication failure message is generated for the control position (AP), wherein the error is rectified by a refresh command issued by the control position (AP) to the faulty slave database (SDB) or a restart of the database application (GD) executed in the cell software (SWZ).

3. Procedure according to claim 1 or 2,
**characterised in that**,
if there is failure of the data update at the master database (MDB), the master database (MDB) is not released and therefore the refresh release is not issued.

4. Procedure according to claim 1,
**characterised in that**,
if the data update at the master database (MDB) continues to fail, the master database (MDB) is reset and is set up again with the last data stored.

5. Procedure according to one of claims 1 to 4,
**characterised in that**
the at least one slave database (SDB) is restarted with its original data, if due to a connection interruption or any other error during a refresh process the data update could not be replicated in a slave database (SDB).

## Revendications

1. Procédé de mise à jour sans interruption pour une base de données maîtresse (MDB) et au moins une base de données esclave (SDB) correspondante, laquelle fait partie d'un réseau de système de guidage (NW) subdivisé en un nombre de cellules de réseau (NWZ), dans lequel
a) un logiciel de cellule (SWZ) spécifique au secteur et affecté à cette cellule de réseau (NWZ) est exécuté sur chaque cellule de réseau (NWZ) et un logiciel de poste de commande (ApX) est exécuté sur un poste de commande (AP) maître englobant le réseau de système de guidage (NW), dans lequel le logiciel de poste de commande (ApX) présente une fonction de navigation (IE) dans le réseau de système de guidage (NW) et dans lequel une application de base de données (GD) est exécutée dans le logiciel de cellule (SWZ) et le logiciel de poste de commande (ApX),
b) en présence d'une mise à jour de données pour la base de données maîtresse (MDB) au moyen de la fonctionnalité de navigation (IE) et lorsque l'application de base de données (GD) verrouille l'accès à la base de données maîtresse (MDB) et que toute réplication sur l'au moins une base de données esclave (SDB) est empêchée, le logiciel de cellule (SWZ) et le logiciel de poste de commande (ApX) ayant à présent davantage accès à la base de données esclave respective affectée (SDB) ;
c) une installation réussie de la mise à jour des données dans la base de données maîtresse (MDB) fait l'objet d'une confirmation au moyen de la fonctionnalité de navigation (IE) sur le poste de commande (AP),
d) après confirmation au moyen de la fonctionnalité de navigation (IE), l'application de base de données (GD) obtient une autorisation pour actualiser l'au moins une base de données esclave (SDB), suite à quoi le logiciel de cellule (SWZ) et le logiciel de poste de commande (ApX) accèdent exclusivement à la base de données maîtresse (MDB);
et
e) chaque base de données esclave (SDB) exécute un processus d'actualisation individuel après l'autorisation d'actualisation.

2. Procédé selon la revendication 1, **caractérisé en ce qu'**en l'absence d'autorisation d'actualisation auprès de l'application de base de donnée (GD) d'une base de données esclave (SDB) au sein d'une cellule de réseau (NWZ) ou en présence d'un échec du processus d'actualisation, un message d'erreur de réplication est généré pour le poste de commande (AP), dans lequel l'erreur est résolue via un ordre d'actualisation émis par le poste de commande (AP) envers la base de données esclave perturbée (SDB) ou un redémarrage de l'application de base de données (GD) exécutée dans le logiciel de cellule (SWZ).

3. Procédé selon la revendication 1 ou 2, **caractérisé en ce qu'**en présence d'un échec de la mise à jour des données dans la base de données maîtresse (MDB), la base de données maîtresse (MDB) n'est pas autorisée et l'autorisation d'actualisation ne se produit dès lors pas non plus.

4. Procédé selon la revendication 3, **caractérisé en ce qu'**en présence d'un échec continu de la mise à jour des données, la base de données maîtresse (MDB) revient à la base de données maîtresse (MDB) et reprend les dernières données enregistrées.

5. Procédé selon l'une des revendications 1 à 4, **caractérisé en ce que** l'au moins une base de données esclave (SDB) est redémarrée avec ses données disponibles à l'origine dans l'hypothèse où l'actualisation des données dans une base de données esclave (SDB) n'a pu se répliquer en raison d'une interruption de la liaison ou d'une autre erreur durant un processus d'actualisation.
